# EUROPEAN PATENT APPLICATION

(11) **EP 4 831 765 A1**
(43) Date of publication of application: **28.10.2026**
(21) Application number: 24905140.0
(22) Date of filing: 25.09.2024
(51) Int. Cl.: G05D 1/43

(54) **AUTONOMOUS OPERATION SYSTEM AND CONTROL METHOD THEREFOR**

(30) Priority: 19.12.2023 CN 202311757034
(71) Applicant: Zhejiang Sunseeker Industrial Co., Ltd, Jinhua, Zhejiang 321000 (CN)
(72) Inventor: CUI, Zhipeng, Jinhua, Zhejiang 321000 (CN)
(74) Representative: Manna, Sara
(86) International application number: PCT/CN2024/121237
(87) International publication number: WO 2025/130229

(57) **Abstract**

Disclosed are an autonomous operation system and a control method therefor. The autonomous operation system includes an autonomous operation device (10) and a working boundary (30). The autonomous operation device (10) is capable of traveling within a working area defined by the working boundary (30) to perform an operation task. At least one tag (51, 52, 53, 54, 55, and 56) is disposed on the working boundary (30), and the tag (51, 52, 53, 54, 55, and 56) does not include any apparatus configured for positioning. The autonomous operation device (10) is provided with a positioning apparatus and a tag reader configured for identifying the tag. The control method includes: when the tag detected by the tag reader is an unrecorded tag (51, 52, 53, 54, 55, and 56), the autonomous operation device travels to a position above the tag and updates coordinate information of the tag with current coordinate information determined by the positioning apparatus.

## Description

### TECHNICAL FIELD

The present disclosure relates to the field of autonomous work devices, and in particular, to an autonomous operation system and a control method therefor.

### BACKGROUND

Conventional autonomous operation devices, such as lawn mowers and sweeping robots, can perform work tasks according to automatically preset programs without manual operation and intervention, and therefore are being increasingly used in people's daily production and daily life.

The autonomous operation device is generally provided with a positioning apparatus configured to locate the autonomous operation device during travel within a working area. As is well known to those skilled in the art, the autonomous operation device may generate a positioning error after operating or traveling for a certain period of time. In addition, as the working time or travel distance increases, the positioning error may continue to accumulate. Therefore, how to calibrate the positioning of the autonomous operation device and improve the positioning accuracy of the self-propelled device is a common need in the art.

In view of the above technical problem, the prior art provides such a solution. That is, markers capable of emitting signals are disposed within a working area, and a corresponding reading apparatus configured to identify the marker is disposed on the autonomous operation device. Each marker is generally associated with a preset coordinate position, and the preset coordinate position is generally implemented using a positioning apparatus. When the autonomous operation device travels within the working area, the coordinate position determined by the positioning apparatus on the autonomous operation device interacts with the preset coordinate position of the marker, thereby achieving positioning calibration of the autonomous operation device.

However, the positioning calibration, which can only be achieved through markers associated with preset coordinate positions, may pose some challenges. For example, such challenges in the deployment of the working area are generally reflected in increased costs due to the complex structure of the markers, increased difficulty in working area deployment, and the like.

### SUMMARY

In view of this, the present disclosure provides an autonomous operation system and a control method therefor, which can at least partially solve the above problems.

To achieve the above objective, the present disclosure provides the following technical solutions.

A control method for an autonomous operation system is provided. The autonomous operation system includes an autonomous operation device and a working boundary, and the autonomous operation device can travel within a working area defined by the working boundary to perform an operation task. At least one tag is disposed on the working boundary, and the tag does not include any apparatus configured for positioning. The autonomous operation device is provided with a positioning apparatus and a tag reader configured to identify the tag.

The control method includes: detecting, by the tag reader, a tag in real time while the autonomous operation device travels within a working area to perform a work task; and when the tag detected by the tag reader is an unrecorded tag, traveling, by the autonomous operation device, to a position above the unrecorded tag and updating coordinate information of the unrecorded tag with current coordinate information determined by the positioning apparatus of the autonomous operation device.

Preferably, the tag includes identification information configured to uniquely identify the tag. Updating the coordinate information of the unrecorded tag with the current coordinate information determined by the positioning apparatus of the autonomous operation device includes: associating the current coordinate information determined by the positioning apparatus with identification information of the unrecorded tag.

Preferably, when the tag detected by the tag reader is an unrecorded tag, the following positioning correction operations are performed:
the autonomous operation device is controlled to first travel to a position above any other recorded tag and perform positioning calibration on the positioning apparatus based on the recorded tag, where the positioning calibration involves updating coordinate information of the positioning apparatus with coordinate information of the recorded tag; and
the autonomous operation device is controlled to return to the position above the unrecorded tag and update the coordinate information of the unrecorded tag with current coordinate information determined by the positioning apparatus after completion of the positioning calibration.

Preferably, when the tag detected by the tag reader is an unrecorded tag, it is determined whether a current positioning error of the autonomous operation device reaches a set threshold. The positioning correction operations are performed only when a determination result is affirmative.

Preferably, whenever the tag detected by the tag reader is an unrecorded tag, the positioning correction operations are performed.

Preferably, the coordinate information of the unrecorded tag is updated with the current coordinate information determined by the positioning apparatus only when the tag detected by the tag reader is an unrecorded tag and it is determined that a current positioning error of the autonomous operation device does not reach a set threshold.

Preferably, when the tag detected by the tag reader is a recorded tag, the autonomous operation device travels to a position above the recorded tag and updates coordinate information of the positioning apparatus with coordinate information of the recorded tag. Preferably, at least one subarea is formed within the working area. While the autonomous operation device travels within any one of the subareas to perform a work task, when the tag reader detects a signal of the tag, it is determined whether the detected tag is a recorded tag. When a determination result is affirmative, the autonomous operation device is controlled to travel to a position above the recorded tag and update coordinate information of the positioning apparatus with coordinate information of the recorded tag. When a determination result is negative, the autonomous operation device is controlled to travel to a position above a closest recorded tag and update the coordinate information of the positioning apparatus with the coordinate information of the recorded tag. Then, the autonomous operation device is controlled to return to the position above the unrecorded tag and update the coordinate information of the unrecorded tag with the current coordinate information determined by the positioning apparatus.

Preferably, while the autonomous operation device travels within any one of the subareas to perform a work task, it is determined in real time or periodically whether a current positioning error of the autonomous operation device reaches a set threshold, and the tag reader remains in a working state of detecting a tag.

When it is determined that the current positioning error of the autonomous operation device does not reach the set threshold and no tag signal is detected by the tag reader, the autonomous operation device is controlled to continue to work in a current subarea until the work task is completed.

When the current positioning error of the autonomous operation device reaches a set threshold, the autonomous operation device is controlled to travel to a position above any one recorded tag and update the coordinate information of the positioning apparatus with coordinate information of the recorded tag.

After update of the coordinate information of the positioning apparatus is completed, the autonomous operation device returns to an original subarea to continue to perform a work task until completion. A working assembly of the autonomous operation device remains deactivated while the autonomous operation device travels toward the recorded tag and while the autonomous operation device returns to the original subarea.

Preferably, the autonomous operation system further includes a prompting unit. When the autonomous operation device travels along a straight line for more than a certain distance and no signal of the tag is detected by the tag reader, the prompting unit is controlled to operate to issue a first alert signal configured to prompt a user to add a tag.

Preferably, while the autonomous operation device travels within the working area to perform a work task, if the tag reader simultaneously receives signals from two or more tags, the prompting unit is controlled to operate to issue a second alert signal configured to prompt a user to adjust a position of a tag.

Preferably, a straight-line distance L between any two adjacent tags is calculated based on coordinate information of the two adjacent tags. The two adjacent tags are defined as follows: a circular region centered at either of the two tags, with a radius equal to the straight-line distance L, does not include any other tag. When it is determined that the straight-line distance L is greater than a predetermined multiple N of an effective distance R within which the tag reader is capable of identifying the tag, the prompting unit is controlled to operate to issue a third alert signal configured to prompt the user to add a tag, N being greater than or equal to 4. The effective distance R is defined as a maximum distance within which the tag reader is capable of receiving a valid signal from the tag.

An autonomous operation system is provided. The autonomous operation system includes:
a working boundary;
at least one tag, disposed on the working boundary, the tag not including any apparatus configured for positioning;
an autonomous operation device, provided with a positioning apparatus and a tag reader configured to identify the tag; and
a processor, configured to perform the control method according to any one of the above embodiments.

Preferably, a straight-line distance between two adjacent tags is L, an effective distance within which the tag reader is capable of identifying the tag is R, and R < L. The two adjacent tags are defined as follows: a circular region centered at either of the two tags, with a radius equal to the straight-line distance L, does not include any other tag. The effective distance R is defined as a maximum distance within which the tag reader is capable of receiving a valid signal from the tag.

Preferably, the straight-line distance L and the effective distance R further satisfy the following relationship: 2R < L.

Preferably, the straight-line distance L and the effective distance R further satisfy the following relationship: 2R < L < 4R.

Preferably, a plurality of tags are also disposed within the working area.

Preferably, the working boundary is provided with boundary corner points, and tags are also disposed at at least some boundary corner points or in their vicinity.

In the embodiments, by means of the above solutions, even if the positioning apparatus is not provided in the tag, i.e., without a preset coordinate position, coordinate assignment and update of the tag, as well as positioning and calibration of the autonomous operation device, can also be achieved, thereby reducing the deployment cost of and difficulty of the working area.

### BRIEF DESCRIPTION OF THE DRAWINGS

FIG. 1 is a schematic diagram of an autonomous operation system according to an embodiment of the present disclosure; and
FIG. 2 is a schematic diagram of a working boundary according to an embodiment of the present disclosure;
FIG. 3 is a schematic diagram of a working area, defined by a working boundary, including at least one subarea according to an embodiment of the present disclosure;
FIG. 4 is a flowchart of a control method according to an embodiment of the present disclosure; and
FIG. 5 is a flowchart of a control method according to another embodiment of the present disclosure.

### DETAILED DESCRIPTION

The present disclosure will be further described in detail below with reference to the drawings and embodiments. It should be understood that the specific embodiments described herein are merely illustrative of the present disclosure and are not to be construed as limiting the present disclosure. In addition, it should be noted that, for convenience of description, only the portions related to the present disclosure are shown in the drawings.

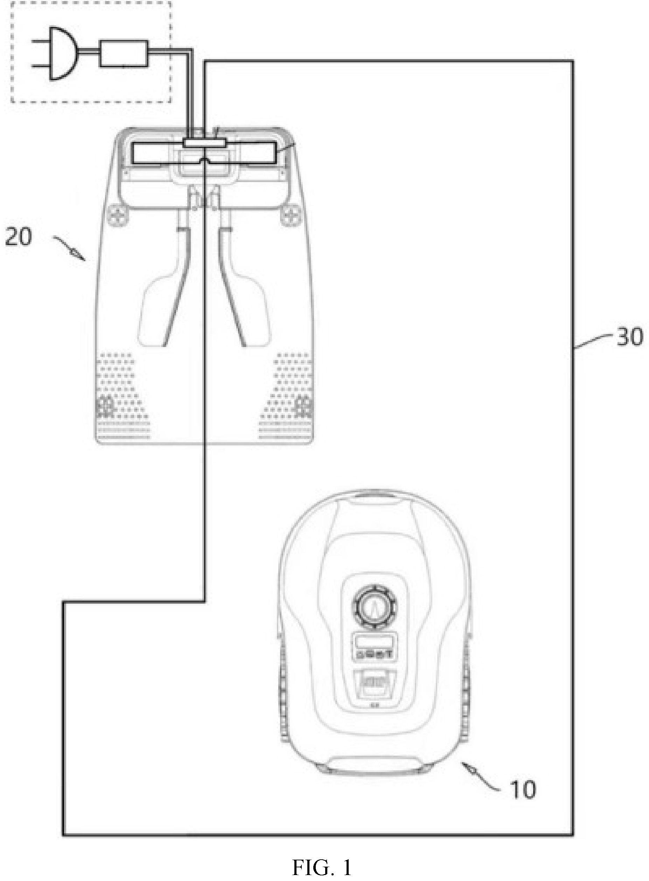

Referring to FIG. 1, this embodiment provides an autonomous operation system including an autonomous operation device 10, a docking station 20, and a boundary 30.

The autonomous operation device 10 is, in particular, a robot that can autonomously move within a preset area and perform a specific operation, typically such as an intelligent sweeper/vacuum cleaner performing a cleaning operation, or an intelligent lawn mower performing a lawn mowing operation. The specific operation particularly refers to an operation for processing a work surface and changing the state of the work surface. The present disclosure is described in detail by taking an intelligent lawn mower as an example. The autonomous operation device 10 can autonomously travel on the surface of a working area, and in particular, as an intelligent lawn mower, can autonomously perform a lawn mowing operation on the ground. The autonomous operation device 10 includes at least a main body mechanism, a moving mechanism, a working mechanism, an energy module, a detection module, an interaction module, a control module, and the like.

The main body mechanism generally includes a chassis and a housing. The chassis is configured to mount and accommodate functional mechanisms and functional modules, such as the moving mechanism, the working mechanism, the energy module, the detection module, the interaction module, and the control module. The housing is generally configured to at least partially cover the chassis, primarily to enhance the aesthetics and recognizability of the autonomous operation device 10. In this embodiment, the housing is configured to be capable of translation and/or rotation relative to the chassis under an external force. In cooperation with a suitable detection module, such as a Hall sensor, the housing can further serve to detect events like collisions and lifting.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. In this embodiment, the moving mechanism is a wheeled moving mechanism, which includes at least one driving wheel and at least one walking prime mover. The walking prime mover is preferably a motor, and in other embodiments, the walking prime mover may be an internal combustion engine or a machine that uses other types of energy sources to generate power. In this embodiment, a left driving wheel, a left walking prime mover that drives the left driving wheel, a right driving wheel, and a right walking prime mover that drives the right driving wheel are preferably provided. In this embodiment, the straight-line travel of the autonomous operation device is achieved by the rotation of the left and right driving wheels at the same speed in the same direction, and the steering travel is achieved by the rotation of the left and right driving wheels in the same direction at different speeds or in opposite directions. In other embodiments, the moving mechanism may further include a steering mechanism independent of the driving wheels and a steering prime mover independent of the walking prime mover. In this embodiment, the moving mechanism further includes at least one driven wheel, typically configured as a universal wheel, and the driving wheel and the driven wheel are respectively located at the front and rear ends of the autonomous operation device.

The working mechanism is configured for performing a specific operation task and includes a working member and a working prime mover that drives the working member to operate. For example, for an intelligent sweeper/vacuum cleaner, the working member includes a roller brush, a dust suction pipe, a dust collection chamber, and the like. For an intelligent lawn mower, the working member includes a cutting blade or a cutting deck, and further includes other components for optimizing or adjusting a mowing effect, such as a height adjustment mechanism for adjusting a mowing height. The working prime mover is preferably a motor, and in other embodiments, the working prime mover may be an internal combustion engine or a machine that uses other types of energy sources to generate power. In some other embodiments, the working prime mover and the walking prime mover are configured as the same prime mover.

The energy module is configured to provide energy for various work of the autonomous operation device 10. In this embodiment, the energy module includes a battery and a charging connection structure, where the battery is preferably a rechargeable battery; the charging connection structure is preferably a charging electrode that may be exposed outside the autonomous operation device.

The detection module is configured as at least one sensor that senses an environmental parameter or a working parameter of the autonomous operation device 10. Typically, the detection module may include sensors related to the definition of the working area, for example, various types of sensors such as a magnetic induction sensor, a collision sensor, an ultrasonic sensor, an infrared sensor, and a radio sensor. The types of the sensors are adapted to the position and number of corresponding signal generation apparatuses. The detection module may further include positioning navigation-related sensors such as GNSS positioning apparatuses, laser positioning apparatuses, electronic compasses, acceleration sensors, odometers, angle sensors, and geomagnetic sensors. The detection module may further include sensors related to its own working safety, such as an obstacle sensor, a lifting sensor, and a battery pack temperature sensor. The detection module may further include sensors related to an external environment, such as an ambient temperature sensor, an ambient humidity sensor, a light sensor, and a rain sensor.

The interaction module is configured at least to receive control command information inputted by a user, transmit information requiring user perception, and communicate with other systems or devices to transmit and receive information. In this embodiment, the interaction module includes an input apparatus disposed on the autonomous operation device 10 for receiving control command information inputted by a user, typically such as a control panel and an emergency stop key. The interaction module further includes a display screen, an indicator light, and/or a buzzer disposed on the autonomous operation device 10, enabling a user to perceive information through light or sound. In other embodiments, the interaction module includes a communication module disposed on the autonomous operation device 10 and a terminal device independent of the autonomous operation device 10, such as a mobile phone, a computer, or a network server. User control command information or other information may be inputted on the terminal device and reach the autonomous operation device 10 via a wired or wireless communication module.

The control module generally includes at least one processor and at least one non-volatile memory. The memory stores a pre-written computer program or an instruction set, and the processor, according to the computer program or the instruction set, controls the performance of movements, work, and the like of the autonomous operation device 10, including the performance of the control method described below. Further, the control module can also control and adjust the corresponding actions of the autonomous operation device 10 and modify parameters in the memory based on a signal of the detection module and/or a user control command. In addition, the control module may be connected to a prompting unit and configured to control an operation of the prompting unit, such that prompt information, including a sound, a light, a text, or the like, is sent to the outside or the user, so as to inform the user of a status of the system and enable the user to perform a corresponding operation on the system.

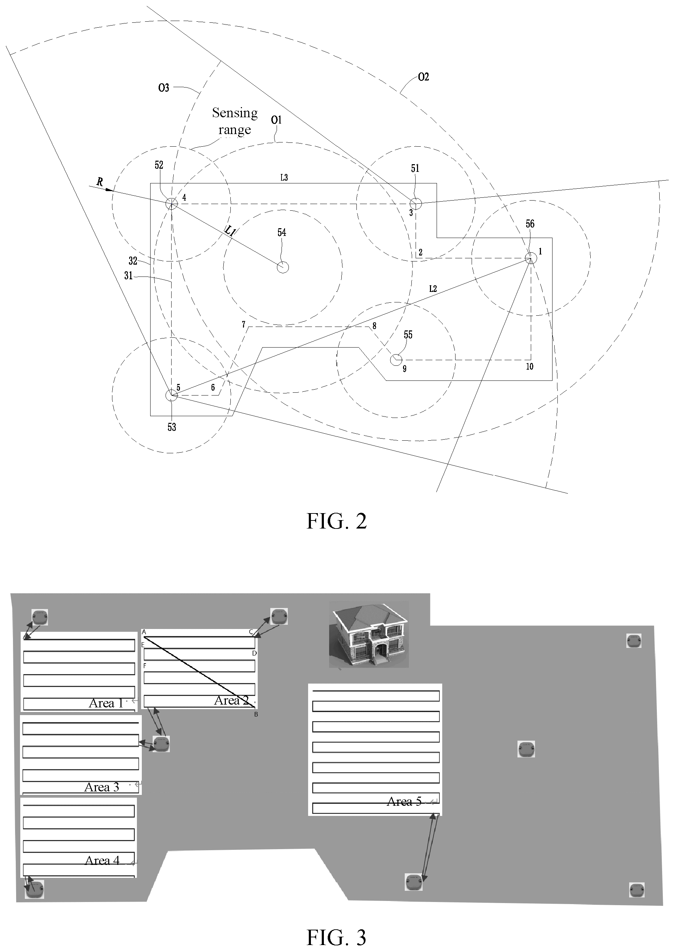

The boundary 30 may generally include an outer boundary and a working boundary. With reference to FIG. 2, in an embodiment where the autonomous operation device 10 is a lawn mower, an outer boundary 32 is a lawn boundary, which may be solid, typically such as a wall, a fence, or a railing. A working boundary 31 defines a working area for the autonomous operation device to travel within to perform an operation task. The working boundary 31 is generally virtual, typically such as a virtual boundary signal issued by a boundary signal generation apparatus, which is generally an electromagnetic signal or an optical signal, or a virtual boundary set in an electronic map, for example, formed by two-dimensional or three-dimensional coordinates, for an autonomous operation device 10 provided with a positioning apparatus (such as GPS). In this embodiment, the working boundary 31 is configured as a closed energized boundary line that is electrically connected to the signal generation apparatus which is generally disposed in the docking station 20.

The docking station 20 is generally configured on the working boundary 31 or within the working boundary 31 for the autonomous operation device 10 to dock, and is particularly capable of supplying energy to the autonomous operation device 10 docked at the docking station.

It should be noted that the solution of this embodiment is applicable to any one of the types of the autonomous operation device 10 exemplified above, which is not uniquely limited in this embodiment. The following description is presented in the context of a lawn mower. However, it can be understood from the above description that the protection scope of the embodiments of the present disclosure is not limited thereto.

With continued reference to FIG. 2, at least one tag (51, 52, 53, 54, 55, and 56) is disposed on the working boundary 32. The tag does not include any apparatus configured for positioning. The autonomous operation device 10 is provided with a positioning apparatus and a tag reader (not shown in the figure). The tag reader is configured to identify the tag and control, in response to a signal from the tag, the autonomous operation device 10 to perform a corresponding action.

In one embodiment, the tag may be a radio frequency identification (RFID) tag. The RFID tag generally includes a chip and a coupling component; the chip includes an electrically erasable programmable read-only memory (EEPROM) configured to store an identification code or other data. The tag includes a built-in antenna primarily configured to communicate with the tag reader. Compared with contemporaneous or early identification technologies, such as a barcode, a magnetic card, and an IC card, the RFID tag has advantages such as non-contact operation, a long reading distance, adaptability to a harsh environment, and capability of identifying a moving target.

Correspondingly, the tag reader is an RFID card reader, configured to control the radio frequency module to transmit a read signal to the RFID tag, receive a response from the RFID tag, decode identification information (ID) of the RFID tag, and transmit the identification information together with other related information on the tag to a host for processing.

In some other implementations, a tag in another form may alternatively be used. For example, permanent magnets are used as tags, and the autonomous operation device 10 distinguishes different tags based on magnetic field characteristics. For another example, active signal transmitters are used as tags, and the autonomous operation device 10 distinguishes different tags by analyzing received tag signals.

Taking the RFID tag as an example, the tag disposed on the outer boundary 31 (e.g., lawn boundary) is not desirable to affect the appearance thereof; therefore, a concrete RFID tag may be selected and fixed beneath the turf.

In this embodiment, a plurality of tags are disposed on the working boundary 32 that is desired to be established. In the solution shown in FIG. 2 (for clarity, the dimensions in the figure are not drawn to scale), the working boundary 32 is located within the outer boundary 31, so as to ensure that the entire machine remains within the outer boundary 31 when the autonomous operation device 10 travels to a position above the tag. In other solutions, the working boundary 32 may also coincide with the outer boundary 31.

Since the tags are configured for positioning correction, a larger number of tags is theoretically more desirable. However, the inventor of the present disclosure has found that as the number of tags increases, in one aspect, the workload of site deployment and the product cost increase. In another aspect, excessively dense tags may cause signal overlap, making it more difficult for the autonomous operation device 10 to identify a specific tag (generally, a specific algorithm is required to identify the specific tag from overlapping signals). Therefore, in the present embodiment, the arrangement of the tags is optimized.

Specifically, an effective distance within which the tag reader disposed on the autonomous operation device 10 is capable of identifying the tag is R, a straight-line distance between two adjacent tags is L, and R < L. The effective distance R is a maximum distance within which the tag reader is capable of receiving a valid signal from the tag, that is, the radius of a dashed circle surrounding each tag in FIG. 2. The dashed circle defines a sensing range of the tag. For the RFID tag, when the distance between the autonomous operation device 10 and the tag is less than or equal to the effective distance R, the tag reader on the autonomous operation device is capable of receiving a valid tag signal. When the distance between the autonomous operation device and the tag is greater than the effective distance R, the tag reader is unable to receive a valid tag signal.

Further, 2R < L, that is, the straight-line distance between two adjacent tags is greater than twice a maximum readable distance of a single tag. In this way, it can be ensured that at any position within the working area, the autonomous operation device 10 can detect at most one tag, thereby effectively reducing the number of tags to be arranged while ensuring the positioning effect. Still further, 2R < L < 4R, which ensures that the number of tags is not excessively small, thereby ensuring the positioning effect.

In general, the tag should preferentially be arranged on the boundary 32 of the working area. In practice, the user needs to mount the tag on a desired working area boundary 32 according to the above distance requirements. In addition, some tags should also be appropriately distributed inside the working area, such that the autonomous operation device 10 can achieve positioning and calibration when traveling inside the working area.

Further, tags are also disposed at at least some boundary corner points of the working boundary 32 or in their vicinity. Taking the working boundary 32 shown in FIG. 2 as an example, there are a total of 10 corner points. Tags 51, 52, 53, 55, and 56 are respectively provided at the corner points numbered 1, 3, 4, 5, and 9, and other corner points 2, 6, 7, 8, and 10 are not provided with tags. When the shape of the working boundary 32 is different, the number of boundary corner points provided with the tag varies, which is mainly based on the distance requirements that should be followed in tag arrangement as described above. Following the above description, to prevent the autonomous operation device 10 from traveling to the outside of the working boundary 32 during working, the working boundary 32 is generally a closed region, including a plurality of segments of lines connected end to end in sequence. In this embodiment, the boundary corner point may be defined as an intersection point of adjacent boundary lines.

It should be noted that the above definition of the boundary corner point is applicable to a scenario where the working boundary is formed by sequentially connecting a plurality of lines; that is, the lines forming the working boundary have definite line intersection points (including intersection points between straight lines, intersection points between a straight line and a curve, and intersection points between curves). In this scenario, the lines on both sides of the intersection point do not transition smoothly. In contrast, when the working boundary is in a smoothly transitioning shape, such as a circle or an ellipse, the above intersection points do not exist. In this case, the boundary corner point may instead be defined based on the tag. That is, the position point of the tag on the working boundary is defined as the boundary corner point.

Generally, during travel of the autonomous operation device 10 along the working boundary 32, the movement direction usually changes significantly in the vicinity of the boundary corner point (e.g., making a 90° turn), and the traveling speed also generally changes considerably in the vicinity of the boundary corner point (generally, the autonomous operation device decelerates when approaching the corner point and accelerates after leaving the corner point). Therefore, compared with traveling substantially along a straight line, traveling in the vicinity of the boundary corner point requires more complex control algorithms, and an abrupt change in pose may cause more significant disturbances to the positioning system. Therefore, providing a tag configured for positioning correction in the vicinity of the boundary corner point may bring about a more significant improvement in the accuracy and timeliness of positioning correction.

The tag reader is disposed at the bottom of the autonomous operation device 10. The distance between the autonomous operation device 10 and the tag refers to a horizontal distance between the tag reader and the tag (a vertical distance between the tag reader and the ground is generally negligible compared to the horizontal distance between the tag reader and the tag).

In this embodiment, two adjacent tags are defined as follows: a circular region centered at either of the two tags, with a radius equal to the straight-line distance L, does not include any other tag. It should be noted that if two tags satisfy the above definition, that is, the two tags are adjacent tags, the two tags shall comply with the above distance requirement. Conversely, if two tags do not satisfy the above definition, the straight-line distance L between the two tags may not be subject to an upper limit value of the above distance requirement, but shall still comply with a lower limit value of the above distance requirement.

Specifically, as shown in FIG. 2, five tags are schematically shown. O2 is a circle centered at the tag 53, with a radius equal to a straight-line distance L2 between the tag 53 and the tag 56 (for clarity, only a portion of the circle O2 is shown). The circle O2 encompasses all remaining tags 51, 52, 54, 55. Therefore, based on the above definition, the tag 53 and the tag 56 cannot be considered as adjacent tags. The straight-line distance L2 between the tags 53, 56 shall still comply with the lower limit value of the above distance requirement, i.e., L2 > R, and further, L2 > 2R, but it is not required to comply with the upper limit value of the above distance requirement, i.e., L2 may not necessarily be less than 4R. In fact, the tags 53, 56 can be substantially regarded as two diagonal points located at the working boundary 32, and the straight-line distance L2 between the two depends on the size of the working boundary 32; therefore, the straight-line distance therebetween is not subject to the upper limit value described above. Therefore, L2 may even be greater than 4R. From this, it is derived that for a tag located at a diagonal point position of the working boundary 32, when the tag is disposed, it is only necessary to ensure that the straight-line distance between the tag and its adjacent tag (which should first satisfy the above definition of adjacent tags) satisfies the above distance requirement.

In the above example, two tags located at diagonal points of the working boundary 32 do not satisfy the above definition of adjacent tags. In addition, in some embodiments, two tags on the same side of the working boundary 32 (i.e., the boundary line described above) may also not satisfy the above definition of adjacent tags, and thus cannot be considered as adjacent tags in these embodiments, which is different from conventional understanding.

For example, as shown in FIG. 2, O3 is a circle centered at the tag 51, with a radius equal to a straight-line distance L3 between the tag 51 and the tag 52 (similarly, for clarity, only a portion of the circle O3 is shown). The circle O3 encompasses all remaining tags 54, 55, 56, except for the tag 53. Therefore, based on the above definition, even if the tag 51 and the tag 52 are located on the same side of the working boundary 32, they cannot be considered as adjacent tags. Similarly, the straight-line distance L3 between the tags 51, 52 shall still comply with the lower limit value of the above distance requirement, i.e., L3 > R, and further, L3 > 2R, but it is not required to comply with the upper limit value of the above distance requirement, i.e., L3 may not necessarily be less than 4R, and may even be greater than 4R. Conversely, O1 is a circle centered at the tag 54, with a radius equal to a straight-line distance L1 between the tag 54 and the tag 52. The circle O1 does not encompass any other tag. That is, except for the tags 52, 54, all remaining tags 51, 53, 55, 56 are located outside the circle O1. Therefore, the tag 54 and the tag 52 satisfy the above definition and are adjacent tags. In this case, the setting of the straight-line distance L1 between the tag 54 and the tag 52 should satisfy both the upper limit value and the lower limit value of the above distance requirement. After the arrangement of the working boundary 32 and the working area is completed, the autonomous operation device 10 can start to work.

When the autonomous operation device 10 works for the first time or works for the first time after being reset, or when map information is corrected (e.g., due to a change or adjustment of the working area), the autonomous operation device 10 does not have map information of the working area. In this case, before the autonomous operation device 10 starts to work, a map of the working area needs to be established (referred to as mapping).

Specifically, the autonomous operation device 10 departs from the docking station 20 and travels around the working boundary 32 once, during which the autonomous operation device 10 passes each tag on the working boundary 32. When the autonomous operation device 10 returns to the docking station 20 after traveling around the working area boundary 32 once, the preliminary mapping process is completed. After the preliminary mapping is completed, the autonomous operation device 10 displays to the user a map image including tag IDs (identification information) and coordinate positions of the tags via an onboard display apparatus, a handheld terminal (such as a mobile phone), or the like, and prompts the user to confirm the accuracy thereof. If the user confirms the accuracy of the displayed map information, the autonomous operation device 10 may travel along the path determined during the preliminary mapping again, and prompt the user to confirm whether the travel path is consistent with the previously confirmed map. After reconfirmation that the map information is correct, the mapping process of the autonomous operation device 10 is completed, and the autonomous operation device may subsequently automatically perform an operation at a preset or user-specified time. During travel of the autonomous operation device 10 within the working area, if an unrecorded tag is detected, the ID of the tag is recorded, and the coordinates of the tag are recorded when a certain condition is satisfied, which will be described in detail below.

For an autonomous operation device 10 using global navigation satellite system (GNSS)-based positioning, the autonomous operation device 10 is generally controlled via a mobile phone to travel along a desired working area boundary 32, and the coordinates of tags on the working boundary 32 are recorded during the travel. For an autonomous operation device 10 using vision-based positioning, the autonomous operation device may generally find a boundary line between the working boundary 32 and the non-working boundary by itself and define it as the boundary of the working area. The autonomous operation device travels along the boundary and records the coordinates of the working boundary 32 during the travel. The following description of the solution is provided based on the autonomous operation device 10 using vision-based positioning.

The autonomous operation device 10 performs positioning using a camera, an inertial measurement unit (IMU), and a visual simultaneous localization and mapping (V-SLAM) algorithm. The IMU suffers from cumulative errors, and the error in IMU data increases as the travel distance increases. For a camera and a V-SLAM algorithm, overly similar scenes in the working environment may lead to false loop closures and incorrect relocalization. In addition, due to the complexity of the outdoor working environment and the relatively harsh working conditions, sensors may generate erroneous data, resulting in feature point mismatch. If the above problems are not corrected in time, the autonomous operation device 10 may fail to obtain its current accurate position, thereby performing incorrect operations, typically including missed mowing areas, traveling outside the working area, and the like.

The docking station 20 is a fixed apparatus, and the position where the autonomous operation device 10 is docked at the docking station 20 is also fixed. Therefore, the autonomous operation device 10 generally uses the position where it is docked at the docking station 20 as the origin of map coordinates. That is, when the autonomous operation device 10 is docked at the docking station 20, the autonomous operation device can determine its initial coordinates, or correct its current coordinates to the origin coordinates.

During mapping, the autonomous operation device 10 departs from the docking station 20. The cumulative travel distance since the last positioning correction (i.e., when the autonomous operation device is located at the docking station 20) is relatively short; therefore, the cumulative positioning error is small, and the coordinate determined by the positioning apparatus of the autonomous operation device 10 may be considered as the actual coordinate. In this case, when the autonomous operation device 10 travels to a position above a tag, the current coordinates of the autonomous operation device 10 may be used as the coordinates of the tag, and the ID of the tag may be associated with the coordinates.

During work, when the autonomous operation device 10 detects an unrecorded tag, it first determines whether the current positioning error exceeds a limit. Illustratively, the cumulative travel distance or the cumulative travel time since the last positioning correction is used as a reference or basis. For example, the autonomous operation device 10 is provided with an odometer configured to accumulate travel mileage and/or a timer configured to accumulate travel time. The odometer and the timer are reset to zero after each positioning correction, and start a new accumulation cycle of mileage and/or time after each positioning correction. When the cumulative travel distance or the cumulative travel time of the autonomous operation device 10 since the last positioning correction reaches a set value, that is, since the last positioning correction, as long as at least one of the cumulative travel distance and the cumulative travel time of the autonomous operation device 10 reaches its corresponding set value, it is determined that the current positioning error of the autonomous operation device 10 exceeds the limit; that is, the positioning error reaches the set threshold. Conversely, if neither the cumulative travel distance nor the cumulative travel time reaches its corresponding set value, it indicates that the current positioning error of the autonomous operation device 10 does not exceed the limit.

In this embodiment, the set distance value and the set time value used for determining whether the current positioning error of the autonomous operation device 10 exceeds the limit may be specifically determined based on an allowable error range and the characteristics of electronic components of the autonomous operation device 10 (e.g., IMU devices), which is not limited in this embodiment.

Herein, "reach" may be understood as being greater than or equal to. For example, the cumulative travel distance reaching the set value may be understood as the cumulative travel distance being greater than or equal to the set value. In addition, the autonomous operation device 10 traveling to a position above a tag may be understood as a projection of the autonomous operation device 10 onto the ground covering the tag. Further, when the autonomous operation device 10 travels until the tag reader is aligned with the tag, it may be determined that the autonomous operation device 10 travels to a position right above the tag. In general, alignment between the tag reader and the tag may be achieved by controlling the autonomous operation device 10 to stop when the signal strength of the tag detected by the tag reader reaches a maximum.

Following the above description, if the positioning error does not exceed the limit, the coordinates determined by the positioning apparatus of the autonomous operation device 10 may be considered as the actual coordinates. In this case, when the autonomous operation device 10 travels to a position above the tag, the current coordinates determined by the positioning apparatus are used as the coordinates of the tag, and the ID of the tag is associated with the coordinates. If the positioning error has exceeded the limit, the autonomous operation device 10 first travels to a recorded tag for positioning correction, and then returns to the unrecorded tag for identification and recording. In some embodiments, once an unrecorded tag is found, positioning correction is performed first.

During mapping of the autonomous operation device 10 or during travel within a working area to perform a work task, if the tag reader simultaneously receives signals from two or more tags, it indicates that the signals of the two tags overlap. In this case, the distance between the two tags does not satisfy the above distance requirement; that is, the straight-line distance L between the two tags is less than the lower limit value of the distance requirement. The prompting unit operates to issue an alert signal configured to prompt a user to adjust the position of a tag, for example, "Tag XX is too close to tag XX. Please adjust in time" (XX may be the ID of a tag). As described above, the prompting unit may be disposed on the autonomous operation device 10, or may be disposed on a handheld terminal, such as a mobile phone, in communication connection therewith. The above alert message may be presented in the form of voice broadcasting, text notifications, or the like. In this way, after receiving the alert signal, the user can find the corresponding tag, thereby facilitating adjustment of the position of the tag.

In addition, since the autonomous operation device 10 can acquire the coordinates of the tags, the straight-line distance L between two adjacent tags can be obtained based on the coordinate information of any two adjacent tags. When it is determined that the straight-line distance L is less than a set multiple N of the effective distance R (N ≥ 4) based on the obtained straight-line distance L between two adjacent tags, which essentially means that there is no tag in a relatively large area within the working area, or there is a relatively large tag-free area between two adjacent tags, the prompting unit may also operate to issue an alert signal configured to prompt a user to add a tag, thereby suggesting that the user add a tag in this area.

Based on the foregoing inventive concept, a detailed solution of the control method according to the embodiments will be described below.

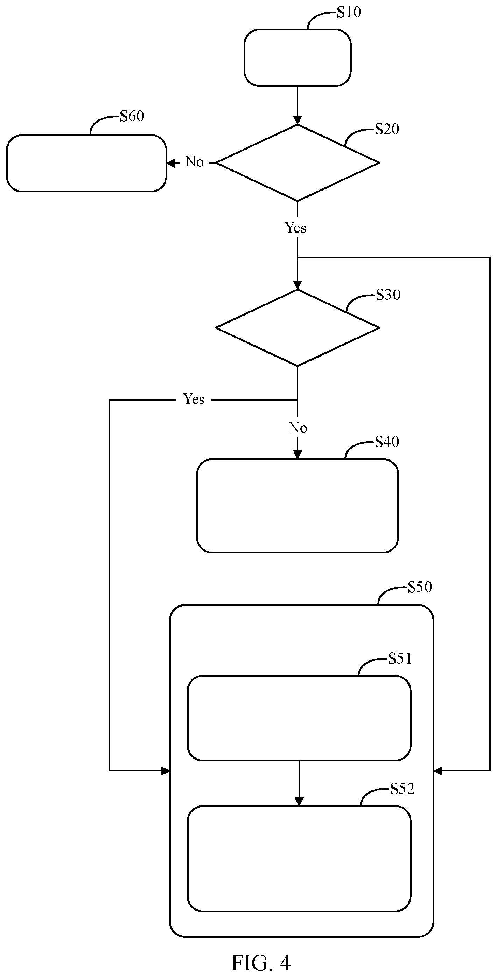

With reference to FIG. 4, the control method includes the following steps.

In step S10, while an autonomous operation device 10 travels within a working area to perform a work task, a tag reader detects a tag in real time. As described above, with reference to FIG. 2, during the travel of the autonomous operation device 10, once the tag reader enters a sensing range of the tag in FIG. 2, the tag reader can receive a valid tag signal.

In step S20, determination is performed on a tag detected by the tag reader to determine whether it is an unrecorded tag.

Different from the prior art, in the embodiments, the tag does not include an apparatus configured for positioning, but still includes identification information (ID). The identification information may be any characters capable of uniquely identifying the tag, such as any random numbers between 00000000 and 99999999, or may further include a mixture of characters, including letters, dates, and the like.

The memory included in the autonomous operation device 10 is configured to store tag IDs that are read. In the case where the memory does not store the tag ID before the autonomous operation device 10 works for the first time, or after being reset, or when the map needs to be re-established due to changes in working sites, all stored tag IDs are cleared. In this way, during the first mapping or remapping after resetting, the ID of each tag traveled by the autonomous operation device 10 is recorded in the memory, forming a dataset for subsequently determining whether a tag has been recorded.

Therefore, a method for determining whether the tag has been recorded is to match the ID of a read tag against the dataset in the memory. If the matching fails, that is, no identical ID is found in or matched against the dataset, it indicates that the tag has not been recorded; in this case, the ID of the tag that has not been recorded previously is stored in the dataset. Conversely, if the matching succeeds, that is, an identical ID is found in or matched against the dataset, it indicates that the tag has been recorded previously.

In step S40, if the above determination is affirmative, that is, the tag is an unrecorded tag, the autonomous operation device 10 is controlled to travel toward the unrecorded tag until reaching above the unrecorded tag, and coordinate information of the unrecorded tag is updated with current coordinate information determined by a positioning apparatus of the autonomous operation device 10.

Since the ID of the tag has been identified and recorded, the way to assign or update the coordinates of the unrecorded tag is to associate the current coordinate information determined by the positioning apparatus of the autonomous operation device 10 with the ID of the unrecorded tag. In this way, a one-to-one mapping relationship is established between the ID of the tag and the coordinate information, and can be stored in the memory in a form of a data table shown in Table 1. One column of the data table stores the tag ID, another column stores the coordinate information, and a corresponding tag ID and coordinate information are located in the same row.

**Table 1. Corresponding relationship table between tag ID and coordinate information**

| Tag ID | Coordinate information |
|---|---|
| 0000000 | (x0, y0) |
| 00000001 | (x1, y1) |
| ... | ... |
| 99999999 | (x99999999, y99999999) |

Coordinate information is assigned to an unrecorded tag by the autonomous operation device 10, and an association relationship between the tag ID and the coordinate information is established, thereby converting the tag into a recorded tag. It can be seen that the recorded tag includes coordinate information. In this way, during the travel of the autonomous operation device 10, as long as a recorded tag is detected, the autonomous operation device can locate the recorded tag by using the coordinate information thereof.

It can be seen that in the embodiments, by means of the above solutions, even if the coordinate position is not preset in the tag, coordinate assignment and update of the tag, as well as positioning and calibration of the autonomous operation device 10, can also be achieved, thereby reducing the deployment cost and difficulty of the working area.

As described above, when the tag is an unrecorded tag, the tag does not include coordinate information, and the coordinate information thereof can only be assigned by the autonomous operation device 10. Although the autonomous operation device 10 can acquire the coordinate information by itself (since it is provided with a positioning apparatus), there may still be errors in the coordinate information. Therefore, after a certain condition is satisfied (i.e., as described above, the positioning error reaches the set threshold), the coordinates of the autonomous operation device 10 are also required to be calibrated. The calibrated coordinates are assigned to the unrecorded tag, thereby ensuring that the coordinate information assigned to the tag is relatively accurate.

Based on this, when the determination result of step S20 is affirmative; that is, the detected tag is an unrecorded tag, a positioning correction operation of step S50 is performed. The specific steps of the positioning correction operation are further as follows:
In step S51, the autonomous operation device 10 is controlled to first travel to a position above any other recorded tag and perform positioning calibration on the positioning apparatus based on the recorded tag, which specifically involves updating coordinate information of the positioning apparatus with coordinate information of the recorded tag. In this step, the coordinates of the autonomous operation device 10 are corrected based on the recorded tag. In step S52, the autonomous operation device 10 is controlled to return to the position above the unrecorded tag and update the coordinate information of the unrecorded tag with current coordinate information determined by the positioning apparatus after completion of the positioning calibration.

In this way, the assignment of the coordinates to the unrecorded tag is completed. In addition, since the coordinates of the autonomous operation device 10 are calibrated in advance based on other recorded tags, the accuracy of the coordinate information assigned to the unrecorded tags is higher.

In one embodiment, when the determination result of step S20 is affirmative, that is, when the detected tag is an unrecorded tag, step S30 is first performed, that is, determining whether a current positioning error of the autonomous operation device 10 reaches a set threshold. The positioning correction operation in step S50 is performed only when the determination result of step S30 is affirmative; that is, the positioning error of the autonomous operation device 10 has reached the set threshold.

Otherwise, when the determination result of step S30 is negative, that is, the positioning error of the autonomous operation device 10 does not reach the set threshold, it is not necessary to perform the positioning correction operation in step S50, and the coordinate assignment operation in step S40 is directly performed instead. That is, only when the detected tag is an unrecorded tag and the positioning error of the autonomous operation device does not reach the set threshold, the coordinate information of the unrecorded tag is updated with the current coordinate information determined by the positioning apparatus is updated.

In short, when an unrecorded tag is detected, if the positioning error of the autonomous operation device 10 does not exceed the limit, the autonomous operation device 10 directly travels to a position above the unrecorded tag, and the current coordinates of the autonomous operation device 10 are used as the coordinates of the unrecorded tag. If the positioning error has exceeded the limit, the autonomous operation device 10 first travels to other recorded tags for positioning correction, and then returns to the position above the unrecorded tag to assign coordinates to the unrecorded tag.

Therefore, even if the tag is not provided with coordinate information in advance, by using the above solution according to the embodiments, it is determined whether the positioning error of the autonomous operation device 10 exceeds the limit, thereby determining whether the autonomous operation device 10 directly assigns coordinates to the tag or requires a positioning calibration operation to assign coordinates to the tag. Thus, both the effect and accuracy of positioning calibration are considered.

Certainly, as described above, as long as an unrecorded tag is detected, the positioning correction operation in step S50 is performed. In this way, the determination step can be reduced, the control procedure can be simplified, and the accuracy of positioning calibration can be improved.

Further, if the determination result of step S20 is negative, that is, the detected tag is a recorded tag, step S60 is performed. That is, the autonomous operation device 10 travels to a position above the recorded tag, and coordinate information of the positioning apparatus of the autonomous operation device 10 is updated with coordinate information of the recorded tag. In this way, during the work of the autonomous operation device 10, the coordinate information is updated in real time based on the recorded tag, thereby not only providing positioning and navigation for the autonomous operation device 10, but also improving the positioning effect of the autonomous operation device 10. In addition, the coordinate information is updated in real time, such that the coordinate assignment is more accurate when the autonomous operation device 10 performs positioning calibration on the unrecorded tag.

The above solution is applicable to the positioning calibration of the autonomous operation device 10 during random traveling within the working area. In some other embodiments, the autonomous operation device 10 may work in a subarea-based working mode. As shown in FIG. 3, at least one subarea (1, 2, 3, and 4) is formed within the working area. In some possible scenarios, no tag is provided in at least some of the subareas, but a tag is provided outside the subareas.The autonomous operation device 10 is driven by a travel path program to sequentially perform work tasks in respective subareas.

As described above, similarly, when the autonomous operation device 10 works within the respective subareas, the V-SLAM positioning may generate mismatches and cumulative errors, or loop closure errors and relocalization errors as the travel mileage increases or the travel time extends. Therefore, it is also necessary to perform positioning calibration for the system in this scenario. Details are as follows.

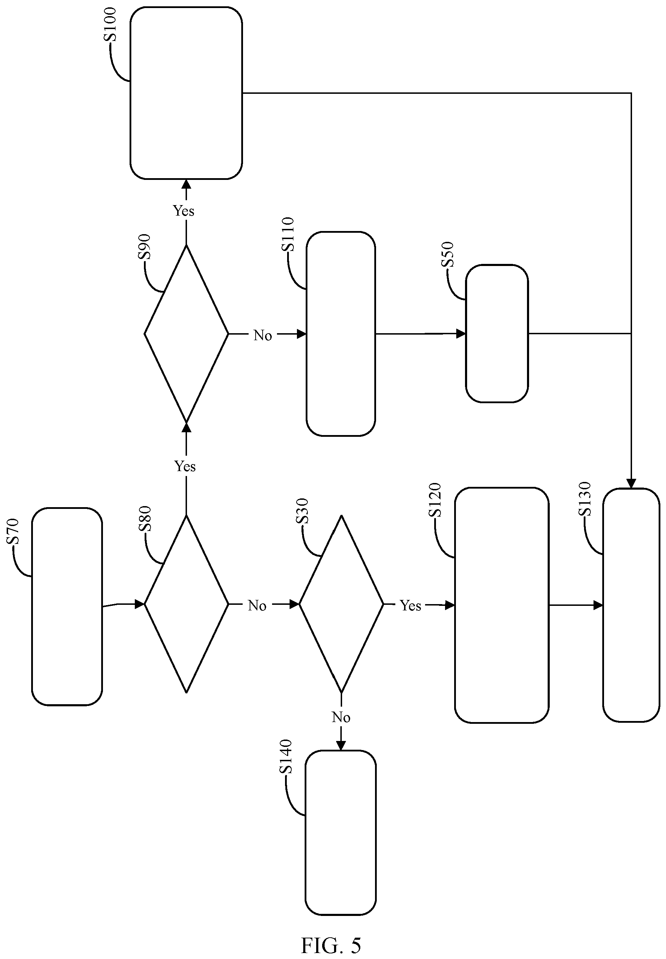

As shown in FIG. 5, the autonomous operation device 10 performs the operation in step S70 and travels within any subarea to perform a work task. During the process, the tag reader remains in a working state of detecting a tag, as shown in step S80. When the result of step S80 is affirmative, that is, when the tag reader detects a tag signal, the autonomous operation device 10 subsequently performs the operation in step S90, i.e., determining whether the detected tag is a recorded tag. When the determination result of step S90 is affirmative, that is, when the detected tag is a recorded tag, the autonomous operation device 10 is controlled to perform the operation in step S100, i.e., traveling to a position above the recorded tag and updating coordinate information of the positioning apparatus with coordinate information of the recorded tag. In this way, the positioning calibration of the autonomous operation device 10 is completed. Subsequently, the autonomous operation device 10 is controlled to perform the operation in step S130, so as to return to the current subarea to continue to work until the work task is completed.

When the determination result of step S90 is negative, that is, when the detected tag is an unrecorded tag, the autonomous operation device 100 is controlled to perform the operation in step S110, i.e., traveling to a position above a closest recorded tag, and then perform the positioning correction operation in step S50. That is, the coordinate information of the positioning apparatus is first upated with the coordinate information of the recorded tag; then, the autonomous operation device returns to the position above the unrecorded tag and updates the coordinate information of the unrecorded tag with the current coordinate information determined by the positioning apparatus. In this way, the recording and positioning calibration of the unrecorded tags is completed. Subsequently, similarly, the autonomous operation device 10 is controlled to perform the operation in step S130.

When the determination result of step S80 is negative, that is, no tag signal is detected by the tag reader throughout the process in which the autonomous operation device 10 travels within a subarea to perform a work task, the autonomous operation device 10 continues to perform step S30 during the process, i.e., determining whether a current positioning error of the autonomous operation device 10 reaches a set threshold. When the determination result of step S30 is negative, that is, the positioning error does not exceed the limit and no tag signal is detected by the tag reader throughout the process, the autonomous operation device 10 is controlled to perform step S140. That is, in this case, the autonomous operation device 10 does not need to perform positioning calibration, and may continue to work within the current subarea until the work task is completed.

When the determination result of step S30 is affirmative, that is, the positioning error has exceeded the limit, the autonomous operation device 10 is controlled to perform the operation in step S120 (similar to step S60), i.e., traveling to a position above any recorded tag and updating coordinate information of the positioning apparatus with coordinate information of the recorded tag, thereby completing the positioning calibration of the autonomous operation device 10 based on the recorded tag. Subsequently, similarly, the autonomous operation device 10 is controlled to perform the operation in step S130.

Certainly, in some other embodiments, if no tag signal is detected by the tag reader throughout the process in which the autonomous operation device 10 travels along a straight line for more than a certain distance to perform a work task, the prompting unit may be controlled to operate to issue an alert signal configured to prompt a user to add a tag. The autonomous operation device 10 traveling along a straight line can be understood as that during the travel period of the autonomous operation device 10 or between the starting point and the end point of the travel of the autonomous operation device 10, the travel direction of the autonomous operation device 10 does not change.

For example, in FIG. 2, when the autonomous operation device 10 travels between any two adjacent boundary corner points (including from the corner point 1 to the corner point 2 or vice versa, from the corner point 2 to the corner point 3 or vice versa, from the corner point 3 to the corner point 4 or vice versa, ..., and from the corner point 10 to the corner point 1 or vice versa), it is regarded as straight-line travel.

Alternatively, in FIG. 3, when the autonomous operation device 10 travels from point A to point C (or vice versa), from point C to point D (or vice versa), from point D to point E (or vice versa), or from point E to point F (or vice versa) in a subarea 2, it may also be regarded as straight-line travel.

Conversely, in FIG. 2, when the autonomous operation device 10 travels between two non-adjacent corner points (e.g., from corner point 1 to corner point 3, or from corner point 5 to corner point 10), it cannot be regarded as straight-line travel. Similarly, in FIG. 3, when the autonomous operation device 10 travels from point A to point D, from point C to point F, or the like in the subarea 2, it cannot be regarded as straight-line travel, either. This is because the direction of the autonomous operation device 10 changes during its travel along the travel paths exemplified above.

It should be noted that it is advantageous to determine whether a tag signal is detected while the autonomous operation device 10 travels along a straight line. Specifically, for example, when the autonomous operation device 10 travels back and forth in an S-shaped circuitous pattern in the subarea 2 as shown in FIG. 3, after completion of the work task in the subarea 2, the total travel distance may be long; however, the displacement is actually only the length of the connecting line between the starting point A and the end point B of the subarea 2. Therefore, if the distance traveled by the autonomous operation device 10 is used as the basis for determining whether to add a tag as described above, it may result in a problem that the autonomous operation device 10 frequently issues alerts or prompts while traveling within a subarea. According to the solution of the present disclosure, to ensure the continuity of the subarea-based work of the autonomous operation device 10, it is not necessary to provide tags within each subarea. Certainly, the problem that the autonomous operation device 10 frequently issues alerts or prompts during its travel due to using the travel distance as the determination basis not only exists in the scenario where the autonomous operation device 10 works within the subareas as shown in FIG. 3, but also exists in other scenarios, such as a random working scenario.

In contrast, in this embodiment, whether the distance by which the autonomous operation device 10 travels along a straight line exceeds the limit is used as the basis for determining whether to prompt the user to add a tag. This can avoid the above problem, thereby making the tag arrangement more reasonable.

For example, assuming that in the subarea 2 as shown in FIG. 3, the distances from point A to point C, from point C to point D, from point D to point E, and from point E to point F are all less than a set distance threshold, while the distance from point A to point B is greater than the set distance threshold, in this case, during travel of the autonomous operation device 10 from point A to point C (or vice versa), from point C to point D (or vice versa), from point D to point E (or vice versa), from point E to point F (or vice versa), ..., to point B in the subarea 2 shown in FIG. 3, the prompting unit does not issue an alert signal, which means that no tag needs to be provided in the subarea 2. This is also consistent with the original intention that no tag may be provided in the subarea.

However, if the autonomous operation device 10 travels from point A to point B in a random working manner, the prompting unit may operate to issue an alert signal to prompt the user to add a tag between point A and point B, which is also consistent with the purpose of properly distributing some tags within the working area.

In one embodiment, during performance of step S120 and step S130, that is, while the autonomous operation device 10 travels toward a recorded tag and while the autonomous operation device 10 returns to an original subarea after completion of correction, a working assembly thereof remains deactivated (taking a lawn mower as an example, the working assembly is a mowing disc; and more preferably, the mowing disc is lifted). In this way, during positioning calibration, the working assembly of the autonomous operation device 10 remains deactivated, which can avoid damage to the tag caused by the working assembly, and also protect the working assembly from being damaged by other hard materials that may be present in the working area, such as hard rocks.

Referring to FIG. 3, the implementation scenario of the control method according to the embodiments is as follows: When the autonomous operation device 10 works within each subarea, if the travel path is very close to any tag, the autonomous operation device 10 travels to the vicinity of the tag to search for the tag. If the ID of the tag is identified (that is, the tag has been recorded), the autonomous operation device 10 may perform positioning correction based on the tag, as shown by the short arrows in the areas 1 to 4. If the tag ID cannot be identified (i.e., the tag has not been recorded), coordinate assignment and positioning calibration are required for the tag. Thus, the autonomous operation device needs to search for a recorded tag, and after completion of positioning calibration based on the recorded tag, the autonomous operation device performs coordinate assignment and positioning calibration on the unrecorded tag.

However, in a subarea such as an area 5, there is always no tag in the vicinity of the travel path of the autonomous operation device 10. In this case, the autonomous operation device 10 continuously determines whether the positioning error exceeds the limit. However, if the positioning error is always in a state of not exceeding the limit, the autonomous operation device 10 continues to work within the current subarea until completion. Conversely, once it is detected that the positioning error exceeds the limit, positioning calibration based on the recorded tag is required for the autonomous operation device 10. After completion of the positioning calibration, the autonomous operation device 10 returns to the original subarea to continue to work until completion.

The above descriptions are only several embodiments of the present disclosure, and those skilled in the art can make various changes or variations to the embodiments of the present disclosure based on the content disclosed in the present disclosure without departing from the spirit and scope of the present disclosure.

## Claims

1. A control method for an autonomous operation system, the autonomous operation system comprising: an autonomous operation device and a working boundary, wherein the autonomous operation device is capable of traveling within a working area defined by the working boundary to perform an operation task; at least one tag is disposed on the working boundary, and the tag does not comprise any apparatus configured for positioning; the autonomous operation device is provided with a positioning apparatus and a tag reader configured to identify the tag;
the control method comprising:
detecting, by the tag reader, a tag in real time while the autonomous operation device travels within a working area to perform a work task; and
when the tag detected by the tag reader is an unrecorded tag, traveling, by the autonomous operation device, to a position above the unrecorded tag and updating coordinate information of the unrecorded tag with current coordinate information determined by the positioning apparatus of the autonomous operation device.

2. The control method according to claim 1, wherein
the tag comprises identification information configured to uniquely identify the tag; and updating the coordinate information of the unrecorded tag with the current coordinate information determined by the positioning apparatus of the autonomous operation device comprises: associating the current coordinate information determined by the positioning apparatus with identification information of the unrecorded tag.

3. The control method according to claim 1, wherein
when the tag detected by the tag reader is an unrecorded tag, the following positioning correction operations are performed:
the autonomous operation device is controlled to first travel to a position above any other recorded tag and perform positioning calibration on the positioning apparatus based on the recorded tag, wherein the positioning calibration involves updating coordinate information of the positioning apparatus with coordinate information of the recorded tag; and
the autonomous operation device is controlled to return to the position above the unrecorded tag and update the coordinate information of the unrecorded tag with current coordinate information determined by the positioning apparatus after completion of the positioning calibration.

4. The control method according to claim 3, wherein
when the tag detected by the tag reader is an unrecorded tag, it is determined whether a current positioning error of the autonomous operation device reaches a set threshold; and
the positioning correction operations are performed only when a determination result is affirmative.

5. The control method according to claim 3, wherein
whenever the tag detected by the tag reader is an unrecorded tag, the positioning correction operations are performed.

6. The control method according to claim 1, wherein
the coordinate information of the unrecorded tag is updated with the current coordinate information determined by the positioning apparatus only when the tag detected by the tag reader is an unrecorded tag and it is determined that a current positioning error of the autonomous operation device does not reach a set threshold.

7. The control method according to claim 1, wherein
when the tag detected by the tag reader is a recorded tag, the autonomous operation device travels to a position above the recorded tag and updates coordinate information of the positioning apparatus of the autonomous operation device with coordinate information of the recorded tag.

8. The control method according to claim 1, wherein
at least one subarea is formed within the working area;
while the autonomous operation device travels within any one of the subareas to perform a work task, when the tag reader detects a signal of the tag, it is determined whether the detected tag is a recorded tag; and
when a determination result is affirmative, the autonomous operation device is controlled to travel to a position above the recorded tag and update coordinate information of the positioning apparatus with coordinate information of the recorded tag.

9. The control method according to claim 8, wherein
when a determination result is negative, the autonomous operation device is controlled to travel to a position above a closest recorded tag and update the coordinate information of the positioning apparatus with the coordinate information of the recorded tag; then, the autonomous operation device is controlled to return to the position above the unrecorded tag and update the coordinate information of the unrecorded tag with the current coordinate information determined by the positioning apparatus.

10. The control method according to claim 8, wherein
while the autonomous operation device travels within any one of the subareas to perform a work task, it is determined in real time or periodically whether a current positioning error of the autonomous operation device reaches a set threshold, and the tag reader remains in a working state of detecting a tag; and
when it is determined that the current positioning error of the autonomous operation device does not reach the set threshold and no tag signal is detected by the tag reader, the autonomous operation device is controlled to continue to work in a current subarea until the work task is completed.

11. The control method according to claim 10, wherein
when the current positioning error of the autonomous operation device reaches a set threshold, the autonomous operation device is controlled to travel to a position above any one recorded tag and update the coordinate information of the positioning apparatus with coordinate information of the recorded tag; and
after update of the coordinate information of the positioning apparatus is completed, the autonomous operation device returns to an original subarea to continue to perform a work task until completion;
wherein a working assembly of the autonomous operation device remains deactivated while the autonomous operation device travels toward the recorded tag and while the autonomous operation device returns to the original subarea.

12. The control method according to claim 1, wherein
the autonomous operation system further comprises a prompting unit;
when the autonomous operation device travels along a straight line for more than a certain distance and no signal of the tag is detected by the tag reader, the prompting unit is controlled to operate to issue a first alert signal configured to remind a user to add a tag.

13. The control method according to claim 12, wherein
while the autonomous operation device travels within the working area to perform a work task, if the tag reader simultaneously receives signals from two or more tags, the prompting unit is controlled to operate to issue a second alert signal configured to prompt a user to adjust a position of a tag.

14. The control method according to claim 12, wherein
a straight-line distance L between any two adjacent tags is calculated based on coordinate information of the two adjacent tags, wherein the two adjacent tags are defined as follows: a circular region centered at either of the two tags, with a radius equal to the straight-line distance L, does not comprise any other tag;
when it is determined that the straight-line distance L is greater than a predetermined multiple N of an effective distance R within which the tag reader is capable of identifying the tag, the prompting unit is controlled to operate to issue a third alert signal configured to prompt the user to add a tag, N being greater than or equal to 4, wherein the effective distance R is defined as a maximum distance within which the tag reader is capable of receiving a valid signal from the tag.

15. An autonomous operation system, comprising:
a working boundary;
at least one tag, disposed on the working boundary, the tag not comprising any apparatus configured for positioning;
an autonomous operation device, provided with a positioning apparatus and a tag reader configured to identify the tag; and
a processor, configured to perform the control method according to any one of claims 1 to 14.

16. The autonomous operation system according to claim 15, wherein
a straight-line distance between two adjacent tags is L, an effective distance within which the tag reader is capable of identifying the tag is R, and R < L;
wherein the two adjacent tags are defined as follows: a circular region centered at either of the two tags, with a radius equal to the straight-line distance L, does not comprise any other tag;
and the effective distance R is defined as a maximum distance within which the tag reader is capable of receiving a valid signal from the tag.

17. The autonomous operation system according to claim 16, wherein
the straight-line distance L and the effective distance R further satisfy the following relationship: 2R < L.

18. The autonomous operation system according to claim 16, wherein
the straight-line distance L and the effective distance R further satisfy the following relationship: 2R < L < 4R.
